Europäisches Patentamt

European Patent Office

Office européen des brevets

(11) Publication number: **0 466 256 A1**

# EUROPEAN PATENT APPLICATION

(21) Application number: **91201710.0**

(22) Date of filing: **03.07.91**

(51) Int. Cl.5: **F16L 37/10**, F16L 23/036, F16B 7/04, E04B 1/58, //E04H1/12

(30) Priority: **13.07.90 BE 9000717**

(43) Date of publication of application:
**15.01.92 Bulletin 92/03**

(84) Designated Contracting States:
**DE ES FR GB IT**

(71) Applicant: **DELTA-LIGHT, naamloze vennootschap**
**Industrieweg 72**
**B-8800 Beveren (Roeselare)(BE)**

(72) Inventor: **Ameloot, Paul Jozef, Gerard, Cornelius**
**Toveressestraat 3**
**B-8800 Rumbeke, Roeselare(BE)**

(74) Representative: **Donné, Eddy**
**Bureau M.F.J. Bockstael nv Arenbergstraat 13**
**B-2000 Antwerpen(BE)**

(54) **Flanged coupling device for pipes, beams and the like.**

(57) Coupling device, characterized in that it mainly consists of the combination of a flange (3)-(23) provided at the end of each of the pipes, beams or such like (1-2-22-27) to be connected with one and other, whereby in relation to one flange (3)-(23) a male coupling element (5) has been provided made up of shaft taps (8-9) and whereby, in relation to a second flange (3)-(23) a female coupling element has been provided which contains means (20-21) which can cooperate with the above-mentioned shaft taps (8-9) so as to realize a disengageable connection between the pipes, beams or such like (1-2-22-27).

Fig.1

The present invention concerns a coupling device, in other words a device which makes it possible to connect elements in a simple and efficient manner.

In particular, the present invention concerns a coupling device to attach end pieces of pipes, beams or such like to one another, such that they can be easily disengaged again.

It is known that for the coupling of pipes, beams or such like, use is very often made of flanges showing several holes, whereby these pipes, beams or such like are put in line by means of said flanges, such that these pipes, beams or such like can be firmly connected with one and other by means of bolts which are applied through the corresponding holes of said flanges, one and other such that by simply removing said bolts the pipes, beams or such like can be dismounted.

Such coupling device is both applicable for pipes designed to carry fluids, gasses or such like and for pipes, beams or such like which are used rather as a construction element, such as for example for building temporary scaffolds, stands on exhibitions, etc.

The coupling device according to the invention mainly consists of the combination of a flange provided at the end of each of the pipes, beams or such like to be connected with one and other, whereby in relation to one flange a male coupling element has been provided made up of shaft taps and whereby, in relation to a second flange a female coupling element has been provided which contains means which can cooperate with the above-mentioned shaft taps so as to realize a disengageable connection between the pipes, beams or such like.

According to a particular embodiment, the coupling device according to the invention mainly consists of the combination of a flange provided at the end of each of the pipes, beams or such like to be connected with one and other, whereby at least two holes have been made in said flange which may correspond with similar holes in a second flange; a male coupling element provided with shaft taps which may be applied through the holes of the flanges of the pipes, beams or such like to be connected with one and other; and a female coupling element provided with means which can cooperate with the above-mentioned shaft taps so as to realize a disengageable connection between the pipes, beams or such like.

In order to better explain the characteristics of the invention, by way of example only and without being limitative in any way, the following two preferred embodiments are described with reference to the accompanying drawings where:

figure 1 shows a view in perspective of the separately represented components of a coupling device according to the invention;

figure 2 shows a view according to arrow F2 in figure 1;

figures 3 and 4 respectively are views according to the arrows F3 and F4 in figure 2;

figure 5 is a cross section according to line V-V in figure 3;

figure 6 shows a view similar to that of figure 2, but after the coupling has been realized;

figures 7, 8 and 9 respectively show a cross section according to lines VII-VII, VIII-VIII and IX-IX in figure 6;

figure 10 shows a variant of the coupling device according to figure 1.

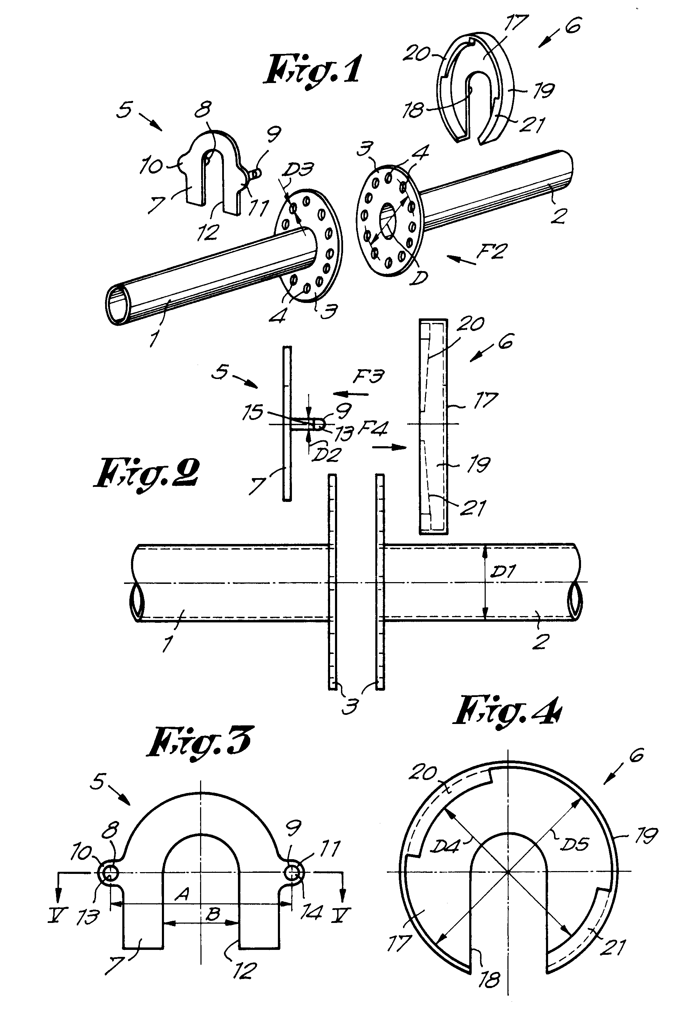

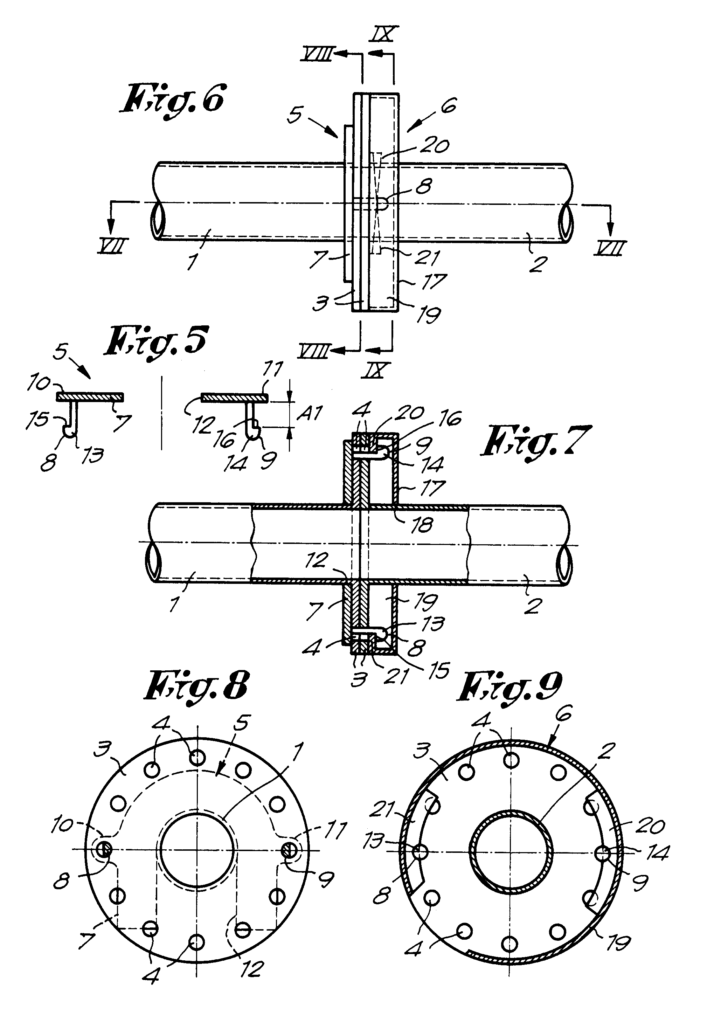

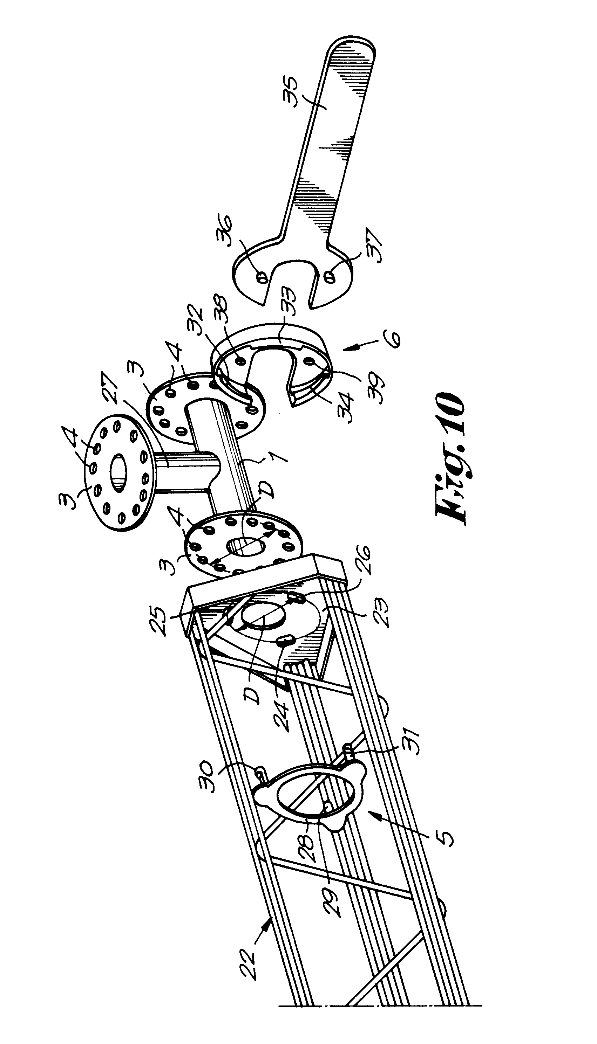

Figure 1 shows two pipes 1 and 2 which are each provided, at their ends, with a flange 3 in which several holes 4 have been made positioned on a nominal diameter D which is identical for both pipes.

The coupling device according to the invention in this case consists of a male element 5 and a female element 6.

The male element 5 is made of a U-shaped plate 7 upon which, on one side two shaft taps 8-9 have been provided which are diametrically opposed to one and other at a nominal distance A which equals said nominal diameter D on which the holes 4 of the flanges 3 have been made.

In this case, the shaft taps 8 and 9 have been put on protrusions 10 and 11 of the plate 7 with the sole aim of saving material.

The U-shaped cavity 12 of the plate 7 has a width B which is only slightly larger than the diameter D1 of a pipe 1 or 2 over which the element 5 should be applied, whereas the diameter D2 of the shaft taps 8 and 9 is slightly smaller than the diameter D3 of the above-mentioned holes 4.

The shaft taps 8 and 9 have, at their free ends, outwardly pointed heads 13-14 which so to say form a hook whose inner wall 15-16 is situated at a distance A1 from the plate 7 upon which they are fixed, which is significantly larger than the thickness of two flanges 3.

The female part 6 of the coupling device according to the invention mainly consists of a U-shaped element also which is formed of a circular plate 17 in which a U-shaped cavity 18 is made whose width B is slightly larger than the diameter D1 of a pipe 1 or 2 over which the element 6 must be applied, whereby the girth of said plate 17 is provided with a collar 19 whose free edge, at two diametrically opposed places, is provided with a key-shaped, inwardly pointed protrusion, 20-21 respectively.

The inside diameter D4 between the key-shaped protrusions 20-21 is slightly larger than the nominal distance A between the shaft taps 8 and 9, whereas the average thickness of each protrusion 20-21 is about equal to the distance A1 between the surfaces 15 and 16 of the shaft taps 8 and 9 and the plate 7 reduced by two times the thickness of a flange 3, in other words the distance A1 is equal to two times the thickness of a flange 3 plus the thickness of a key 21 or 22 in the middle of its length.

Finally, the inside diameter D5 of the above-mentioned collar 19 is slightly larger than the above-mentioned nominal distance A plus the thickness of a head 13 or 14 of the ash taps 8-9.

The use of a coupling device as described above is very simple and as follows.

When the pipes 1 and 2 with the flanges 3 are placed against each other it suffices, according to the invention, to apply for example a male element 7 over the pipe 1 and to push this male element with the shaft taps 8 and 9 through the coaxially positioned holes 4 and to subsequently apply a female element 6 over the second pipe 2, one and other such that the point of the key-shaped protrusions 20 and 21 are situated before the shaft taps 8 and 9 to finally turn the female element 6, in this case counter-clockwise, such that the key-shaped protrusions 20 and 21 so to say hook behind the surfaces 15 and 16 of the shaft taps 8 and 9 so as to draw these shaft taps in the element 6 and thus push the flanges 3 firmly against one and other.

This situation is represented in particular in figures 6 and 7.

In order to disengage the pipes 1 and 2 it suffices to turn the female element 6 clockwise until the shaft taps 8 and 9 are released, after which the pipes 1 and 2 can be separated from one and other.

It is clear that the pipes 1 and 2 can be replaced by any construction whatsoever such as for example beams or such like which must be connected with one and other.

Figure 10 shows a variant whereby beams 22, which in this case are provided at their ends with a flange 23 provided with three holes 24, 25 and 26, must be connected, either with a similar beam, or with a connecting piece 27 which in this case is formed of a T-shaped pipe construction of which each end carries an above-mentioned flange 3 with holes 4.

In this case, the male element 5 can be made in the form of a ring 28 which is provided at one side with shaft taps 29, 30 and 31 placed at angles of 180 degrees, whereby the shaft taps 29 to 31 are made in the same way as the above-mentioned shaft taps 8 and 9 and can move freely through the holes 24 to 26 on the one hand, and through corresponding holes in a flange 3 on the other hand, to finally make a female element 6 cooperate with these shaft taps 29 to 31 which in this case is provided with three key-shaped protrusions 32, 33 and 34 which can cooperate with the shaft taps 29 to 31 in the same manner as described above so as to connect such beam 22 in a simple, disengageable manner with another beam 22, a connecting piece 27 or such like.

Figure 10 shows another equipment 35 provided with two protrusions 36 and 37 which can cooperate with holes 38-39 in plate 17 of the female element 6 so as to be able to tighten the coupling firmly.

Although in the accompanying drawings the surfaces 15-16 are placed on the outer side of the shaft taps 8 and 9, it is clear that according to a variant of the embodiment use could be made of shaft taps 8 and 9 whose surfaces 15 and 16 point to one another.

Naturally, for such an embodiment it would be necessary for the key-shaped elements 20-21 to be situated between the shaft taps 8 and 9 and to be fixed there to the plate 17.

According to yet another variant of the embodiment shaft taps 8 and 9 could be used which, instead of a predominantly L-shaped form, would have a predominantly T-shaped form, in other words whereby for each shaft tap, both an inwardly pointed and an outwardly pointed surface 15, 16 respectively have been provided.

According to such a variant of the embodiment, in preference either outwardly placed protrusions 20-21, or inwardly placed protrusions 20-21, or both inwardly and outwardly placed protrusions 20-21 are to be provided which are naturally all fixed to the plate 17.

Despite of the fact that in the embodiments described above the shaft taps 8-9 are always applied to a plate 7 so as to form a male coupling element 5, such a male coupling element can also be successfully realised according to the invention by applying the shaft taps directly onto a flange 3, one and other such that the shaft taps can move through the holes 4 of a second flange 3 to subsequently complete the coupling by means of a female coupling element 6 as described above and which is provided with inwardly pointed, outwardly pointed or both inwardly and outwardly pointed key-shaped protrusions 20-21, depending on the form of the shaft taps 8-9.

The distance A1 will in this case be the same as the one mentioned above, but reduced by the thickness of one flange 3.

It is clear that the present invention is no way limited to the embodiments described by way of example and shown in the accompanying drawings; on the contrary, such a coupling device according to the invention can be made in various forms and dimensions while still remaining within the scope of the invention.

**Claims**

1. Coupling device, characterized in that it mainly consists of the combination of a flange (3)-(23) provided at the end of each of the pipes, beams or such like (1-2-22-27) to be connected with one and other, whereby in relation to one flange (3)-(23) a male coupling element (5) has been provided made up of shaft taps (8-9) and whereby, in relation to a second flange (3)-(23) a female coupling element has been provided which contains means (20-21) which can cooperate with the above-mentioned shaft taps (8-9) so as to realize a disengageable connection between the pipes, beams or such like (1-2-22-27).

2. Coupling device according to claim 1, characterized in that it mainly consists of the combination of a flange (3)-(23) provided at the end of each of the pipes, beams or such like (1-2-22-27) to be connected with one and other, whereby at least two holes (4)-(24,25,26) have been applied in said flange (3)-(23) which may correspond with similar holes in a second flange (3)-(23); a male coupling element (5) provided with shaft taps (8-9)-(29,30,31) which may be applied through the holes (4)-(24,25,26) of the flanges (3)-(23) of the pipes, beams or such like (1-2-22-27) to be connected with one and other; and a female coupling element (6) provided with means (20-21) which can cooperate with the above-mentioned shaft taps (8-9)-(29,30,31) so as to realize a disengageable connection between the pipes, beams or such like (1-2-22-27).

3. Coupling device according to claim 1 or 2, characterized in that several holes (4) have been made in the flange (3)-(23) which are arranged according to a circle having a diameter (D).

4. Coupling device according to claim 1 or 2, characterized in that three holes (24,25,26) have been provided in the flange (23) at an angle of 180 degrees.

5. Coupling device according to claim 1 or 2, characterized in that the male element (5) is made up of a U-shaped plate (7) whose legs are positioned at a distance (B) from one another which is slightly larger than the transverse dimensions of the pipe, beam or such like to be coupled, whereby each leg of this U-shaped plate has been provided with shaft taps (8-9) which are diametrically opposed to one another at a nominal distance (A) which corresponds with the above-mentioned nominal diameter (D).

6. Coupling device according to claim 1 or 2, characterized in that the male coupling element (5) is made up of two shaft taps (8-9) which are diametrically opposed to one another at a nominal distance (A) which corresponds with the above-mentioned nominal diameter (D) on the flange (3)-(23).

7. Coupling device according to claim 5 or 6, characterized in that each shaft tap (8-9) has an outwardly pointed head (13-14) at its free end which so to say forms a hook whose inner wall (15-16) is situated at a distance (A1) from the plate (7) which is larger than twice the thickness of a flange (3)-(23).

8. Coupling device according to claim 5, characterized in that each shaft tap (8-9) has an inwardly pointed head (13-14) at its free end which so to say forms a hook whose inner wall (15-16) is situated at a distance (A1) from the plate (7) which is larger than twice the thickness of a flange (3)-(23).

9. Coupling device according to claim 5, characterized in that each tap shaft (8-9) has a head (13-14) at its free end which on the one hand is pointed to the inside and on the other hand is pointed to the outside so as to form a T-shaped hook whose inner walls (15-16) are situated at a distance (A1) from the plate (7) which is larger than twice the thickness of a flange (3)-(23).

10. Coupling device according to claim 1 or 2, characterized in that the male coupling element is formed of a ring (28) upon which at least two shaft taps (29,30,31) are provided which are diametrically opposed to one another at a nominal distance (A) which corresponds with the above-mentioned nominal distance (D).

11. Coupling device according to claim 1 or 2, characterized in that the male coupling element is formed of a ring (28) upon which three shaft taps (29,30,31) are provided which are positioned at an angle of 180 degrees and on a nominal diameter (D).

12. Coupling device according to claim 1 or 2, characterized in that the female coupling element (6) is formed of a circular plate (17) provided with a U-shaped cavity (18) whose width (B) is slightly larger than the transversal dimensions of the pipe, beam or such like to be coupled, whereby in at least two diametrically opposed places on said plate (17) a key-shaped protrusion (20,21) has been provided whose actual key is pointed towards the plate (17).

13. Coupling device according to claim 1, characterized in that the female coupling element (6) is formed of a circular plate (17) provided with a U-shaped cavity (18) whose width (B) is slightly larger than the transversal dimensions of the pipe, beam or such like to be coupled, whereby said plate (17) has been provided with three key-shaped protrusions (32,33,34) situated at angles of 180 degrees in relation to each other and whose actual key is pointed towards the plate (17).

14. Coupling device according to claim 11, 12 or 13, characterized in that the each key-shaped protrusion (20,21)-(32,33,34) has been provided in a collar (19) provided on the outer girth of the plate (17).

15. Coupling device according to claim 11, 12 or 13, characterized in that each key-shaped protrusion (20,21)-(32,33,34) has been provided on the plate (17) between the shaft taps (8) and (9).

16. Coupling device according to any of claims 8,9,10,11, characterized in that the inside diameter (D4) between the protrusions (20,21)-(32,33,34) is slightly larger than the nominal distance (A) between the shaft taps (8,9)-(29,30,31).

17. Coupling device according to any of claims 8,9,10,11, characterized in that the outside diameter of the protrusions (20,21)-(32,33,34) is slightly smaller than the nominal distance (A) between the shaft taps (8,9)-(29,30,31).

18. Coupling device according to any of the above claims, characterized in that the average thickness of a key-shaped protrusion (20,21)-(32,33,34) is about equal to the distance (A1) between the surface (15) or (16) of the shaft tap concerned and the plate or ring (7)-(28) reduced by twice the thickness of a flange (3)-(23).

19. Coupling device according to any of claims 1 to 17, characterized in that the average thickness of a key-shaped protrusion (20,21)-(32,33,34) is about equal to the distance (A1) between the surface (15) or (16) of the shaft tap concerned and the flange (3)-(23) reduced by one time the thickness of a flange (3)-(23).

*Fig.1*

*Fig.2*

*Fig.3*

*Fig.4*

Fig.6

Fig.5

Fig.7

Fig.8

Fig.9

*Fig.10*

European
Patent Office

**EUROPEAN SEARCH
REPORT**

Application Number

**EP 91 20 1710**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 136 881 (BOURLIER) <br> * Page 2, line 30 - page 4, line 25; fig. * <br> – – – | 1-19 | F 16 L 37/10 <br> F 16 L 23/036 <br> F 16 B 7/04 |
| A | GB-A-1 368 945 (WHEELER) <br> * Whole document * <br> – – – – – | 1-6,10-13 | E 04 B 1/58 // <br> E 04 H 1/12 |

TECHNICAL FIELDS
SEARCHED (Int. Cl.5)

E 04 B
F 16 B
F 16 L

The present search report has been drawn up for all claims

| Place of search | Date of completion of search | Examiner |
|---|---|---|
| The Hague | 05 November 91 | VAN DER WAL W |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons
------------------------------------------------------------------------
& : member of the same patent family, corresponding
document